# EUROPEAN PATENT APPLICATION

(11) **EP 4 800 241 A1**
(43) Date of publication of application: **02.09.2026**
(21) Application number: 24961091.6
(22) Date of filing: 12.12.2024
(51) Int. Cl.: F03D 80/00

(54) **MAIN SHAFT FOR WIND TURBINE, AND WIND TURBINE**

(30) Priority: 26.11.2024 CN 202411705859
(71) Applicant: Dongfang Electric Wind Power Co., Ltd., Deyang, Sichuan 618099 (CN)
(72) Inventor: XIONG, Kang, Deyang, Sichuan 618099 (CN); WANG, Qijun, Deyang, Sichuan 618099 (CN); ZENG, Zhi, Deyang, Sichuan 618099 (CN); ZENG, Yu, Deyang, Sichuan 618099 (CN); ZHEN, Hongliang, Deyang, Sichuan 618099 (CN); DONG, Yuanyuan, Deyang, Sichuan 618099 (CN); WANG, Hongxian, Deyang, Sichuan 618099 (CN); ZHAO, Da, Deyang, Sichuan 618099 (CN); JIA, Zhaodi, Deyang, Sichuan 618099 (CN); JIANG, Shiping, Deyang, Sichuan 618099 (CN)
(74) Representative: Santarelli
(86) International application number: PCT/CN2024/138912
(87) International publication number: WO 2026/113066

(57) **Abstract**

The present application provides a main shaft for a wind turbine and a wind turbine, relating to the technical field of wind turbines. The main shaft comprises a main shaft body and a mounting bracket configured to fix cables, the main shaft body is oppositely provided with a first flange and a second flange along its own axial direction, the first flange is located on the inner side of the main shaft body, and the second flange is located on the outer side of the main shaft body; the mounting bracket is arranged inside the main shaft body, two ends of the mounting bracket are connected to the first flange and the second flange respectively, and the mounting bracket is fixedly connected to the inner wall of the main shaft body. The main shaft optimizes the structural form, thereby improving machining efficiency and shortening the production cycle.

## Description

### Cross Reference to Related Applications

The present application claims the priority of Chinese Patent Application No. 2024117058592, entitled "Main Shaft for Wind Turbine and Wind Turbine", filed with the China National Intellectual Property Administration on November 26, 2024, the entire content of which is incorporated herein by reference.

### Technical Field

The present application relates to the technical field of wind turbines, and in particular, to a main shaft for a wind turbine and a wind turbine.

### Background of the Invention

With the upscaling development of wind turbines, the wall thickness of large-scale castings such as hubs and main shafts required by wind turbines has become increasingly greater, and the difficulty of casting and machining has risen sharply, resulting in delayed delivery of casting products and affecting the overall production cycle of the turbine.

As one of the four major castings of a wind turbine, the main shaft is the main rotating component of the drive train. Due to the high stress level of the main shaft, it is impossible to directly drill holes for wiring on the wall surface. Therefore, the internal wiring structure of the main shaft is generally formed by providing a plurality of casting bosses on the inner wall of the main shaft, and fixing a wiring plate to the plurality of casting bosses via bolts. In such a wiring structure, the existence of casting bosses prevents one-step forming of the inner side of the main shaft, leading to difficult machining and cumbersome processes of the main shaft. Moreover, restricted by the inner wall dimension, the surface treatment and hole positioning of the bosses cannot be completed by machining and can only be realized by bench workers, resulting in poor machining accuracy, long operation time and serious impact on production progress.

### Summary of the Invention

Objects of the present application include, for example, providing a main shaft for a wind turbine, which optimizes the structural form, thereby improving machining efficiency and shortening the production cycle.

Another object of the present application is to provide a wind turbine, which can optimize the structural form of the main shaft, thereby improving machining efficiency and shortening the production cycle.

Embodiments of the present application can be implemented as follows:
An embodiment of the present application provides a main shaft for a wind turbine, which includes a main shaft body and a mounting bracket configured to fix cables. The main shaft body is oppositely provided with a first flange and a second flange along its own axial direction, the first flange is located on the inner side of the main shaft body, and the second flange is located on the outer side of the main shaft body. The mounting bracket is arranged inside the main shaft body, two ends of the mounting bracket are connected to the first flange and the second flange respectively, and the mounting bracket is fixedly connected to the inner wall of the main shaft body.

Optionally, the mounting bracket is magnetically connected or bonded to the inner wall of the main shaft body.

Optionally, the mounting bracket includes a first mounting bracket and a second mounting bracket, the first mounting bracket and the second mounting bracket are arranged along the axial direction of the main shaft body, one end of the first mounting bracket away from the second mounting bracket is connected to the first flange, one end of the second mounting bracket away from the first mounting bracket is connected to the second flange, and one end of the first mounting bracket close to the second mounting bracket and one end of the second mounting bracket close to the first mounting bracket are both fixedly connected to the inner wall of the main shaft body.

Optionally, each of the first mounting bracket and the second mounting bracket includes a bent member and a plate member connected to each other, one end of the bent member away from the plate member is provided with a magnetic block, and the magnetic block is magnetically connected to the inner wall of the main shaft body. Each of the first mounting bracket and the second mounting bracket includes a first fastener, and the plate member in the first mounting bracket is connected to the first flange and the plate member in the second mounting bracket is connected to the second flange via the first fastener.

Optionally, one end of the bent member away from the magnetic block is provided with a fixing plate, and the plate member is provided with a waist-shaped hole extending in the radial direction of the main shaft body.

Each of the first mounting bracket and the second mounting bracket includes a second fastener, and the second fastener penetrates the fixing plate and the waist-shaped hole at the same time to relatively fix the fixing plate and the plate member.

Optionally, the bent member includes a plurality of consecutive bent portions, every two adjacent bent portions are bent relative to each other, the plate member is connected to the bent portion at one end, and the magnetic block is arranged on the bent portion at the other end.

Optionally, an included angle between any two adjacent bent portions in the first mounting bracket is smaller than an included angle between any two adjacent bent portions in the second mounting bracket.

The bent portion in the first mounting bracket is tubular, and the bent portion in the second mounting bracket includes a sheet body and folded edges oppositely arranged on two sides of the sheet body.

Optionally, in the first mounting bracket, an end of the bent portion away from the plate member is provided with a connecting plate, and the magnetic block is arranged on a surface of the connecting plate facing the inner wall of the main shaft body.

In the second mounting bracket, the magnetic block is arranged on a surface of the sheet body away from the plate member facing the inner wall of the main shaft body.

Optionally, each of the first mounting bracket and the second mounting bracket includes a third fastener, the third fastener in the first mounting bracket penetrates the magnetic block and the connecting plate at the same time to relatively fix the magnetic block and the connecting plate; the third fastener in the second mounting bracket penetrates the magnetic block and the sheet body at the same time to relatively fix the magnetic block and the sheet body.

Optionally, through holes configured for penetrating cable ties are formed in both the bent portion in the first mounting bracket and the folded edges in the second mounting bracket.

The present application further provides a wind turbine, including the main shaft for a wind turbine as described above.

Beneficial effects of the main shaft for a wind turbine and the wind turbine provided by the embodiments of the present application include, for example: to optimize the structural form of the main shaft, improve machining efficiency and shorten the production cycle, a main shaft for a wind turbine is designed, which includes a main shaft body and a mounting bracket configured to fix cables. The main shaft body is oppositely provided with a first flange and a second flange along its own axial direction, the first flange is located on the inner side of the main shaft body, and the second flange is located on the outer side of the main shaft body. The mounting bracket is arranged inside the main shaft body, two ends of the mounting bracket are connected to the first flange and the second flange respectively, and the mounting bracket is fixedly connected to the inner wall of the main shaft body. In the wiring arrangement process, the two ends of the mounting bracket are connected to the first flange and the second flange respectively, and the mounting bracket is fixedly connected to the inner wall of the main shaft body, so that the mounting bracket is fixed. During wiring, cables are fixed on the mounting bracket. Since the casting lug boss structure is eliminated on the inner wall of the main shaft and the mounting bracket is directly fixedly connected to the inner wall of the main shaft body, the structural form of the main shaft is optimized, machining efficiency is improved, and the production cycle is shortened.

### Brief Description of the Drawings

To more clearly describe the technical solutions of the embodiments of the present application, the accompanying drawings required in the embodiments will be briefly introduced below. It should be understood that the following drawings only show some embodiments of the present application and therefore should not be regarded as limiting the scope. For those of ordinary skill in the art, other relevant drawings can be obtained according to these drawings without creative work.
Fig. 1 is a structural diagram of a main shaft in the prior art;
Fig. 2 is a structural diagram of a main shaft in an embodiment of the present application;
Fig. 3 is a sectional view for showing the internal structure of the main shaft in an embodiment of the present application;
Fig. 4 is a structural diagram of a first mounting bracket in an embodiment of the present application;
Fig. 5 is a partial exploded structural view of the first mounting bracket in an embodiment of the present application; and
Fig. 6 is a structural diagram of a second mounting bracket in an embodiment of the present application.

Reference numerals: 100 - Main shaft body; 110 - First flange; 120 - Second flange; 200 - First mounting bracket; 210 - Connecting plate; 300 - Second mounting bracket; 400 - Bent member; 410 - Magnetic block; 420 - Fixing plate; 430 - Bent portion; 431 - Sheet body; 432 - Folded edge; 440 - Through hole; 500 - Plate member; 510 - Waist-shaped hole; 600 - First fastener; 700 - Second fastener; 800 - Third fastener; 900 - Cable.

### Detailed Description of Embodiments

To make the objectives, technical solutions and advantages of the embodiments of the present application clearer, the technical solutions in the embodiments of the present application will be clearly and completely described below with reference to the accompanying drawings in the embodiments of the present application. Obviously, the described embodiments are part of the embodiments of the present application, not all of the embodiments. Generally, the components of the embodiments of the present application described and shown in the accompanying drawings can be arranged and designed in various different configurations.

Therefore, the following detailed description of the embodiments of the present application provided in the accompanying drawings is not intended to limit the scope of the present application as claimed, but merely represents selected embodiments of the present application. Based on the embodiments in the present application, all other embodiments obtained by those of ordinary skill in the art without creative work shall fall within the protection scope of the present application.

It should be noted that similar reference numerals and letters denote similar items in the following drawings, so once an item is defined in one drawing, it does not need to be further defined and explained in the subsequent drawings.

In the description of the present application, it should be noted that if the terms "upper", "lower", "inner", "outer" and the like indicate orientations or positional relationships based on those shown in the drawings, or orientations or positional relationships conventionally placed when the product of the invention is used, they are only for the convenience of describing the present application and simplifying the description, but do not indicate or imply that the device or element referred to must have a specific orientation, be constructed and operated in a specific orientation, and therefore should not be construed as limiting the present application.

In addition, if the terms "first", "second" and the like are used only for distinguishing descriptions, they should not be construed as indicating or implying relative importance.

It should be noted that the features in the embodiments of the present application can be combined with each other without conflict.

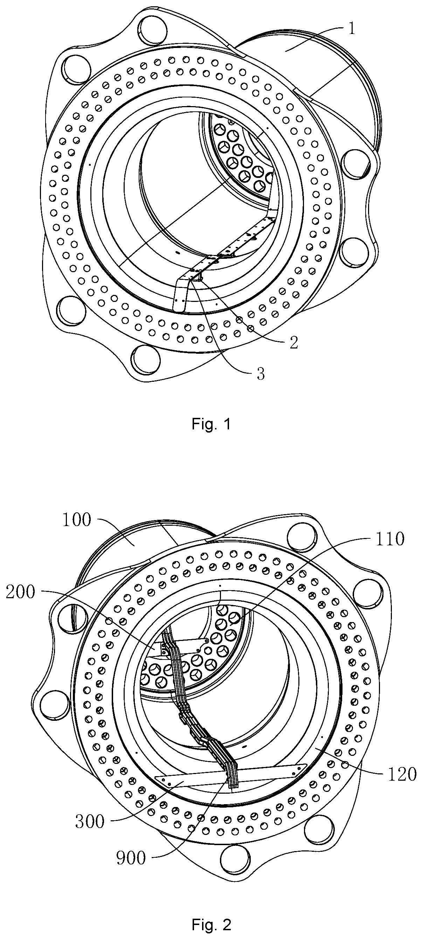

The inventor of the present application has found that the stress level of the main shaft in a wind turbine is high, and it is impossible to directly drill holes for wiring on the wall of the main shaft. As shown in Fig. 1, the internal wiring structure of the existing main shaft 1 is generally formed by providing a plurality of casting bosses 2 on the inner wall of the main shaft 1, and fixing a wiring plate 3 to the plurality of casting bosses 2 via bolts. In such a wiring structure, the existence of casting bosses 2 prevents one-step forming of the inner side of the main shaft 1, leading to difficult machining and cumbersome processes of the main shaft 1. Moreover, restricted by the inner wall dimension of the main shaft 1, the surface treatment and hole positioning of the bosses 2 cannot be completed by machining and can only be realized by bench workers, resulting in poor machining accuracy, long operation time and serious impact on production progress. The embodiments of the present application provide a main shaft for a wind turbine to at least solve the above technical problems.

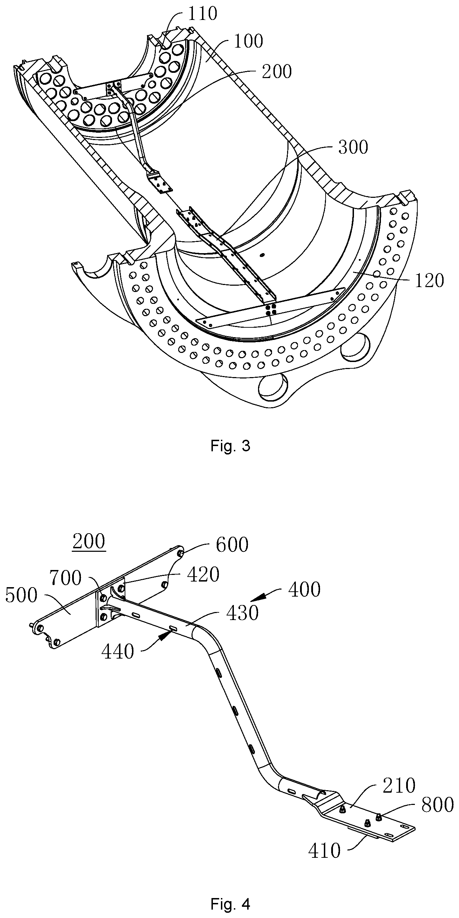

Referring to Fig. 2 and Fig. 3, the main shaft for a wind turbine provided by the embodiment of the present application includes a main shaft body 100 and a mounting bracket configured to fix cables 900. The main shaft body 100 is oppositely provided with a first flange 110 and a second flange 120 along its own axial direction, the first flange 110 is located on the inner side of the main shaft body 100, and the second flange 120 is located on the outer side of the main shaft body 100. The mounting bracket is arranged inside the main shaft body 100, two ends of the mounting bracket are connected to the first flange 110 and the second flange 120 respectively, and the mounting bracket is fixedly connected to the inner wall of the main shaft body 100.

The interior of the main shaft body 100 is hollow, the first flange 110 and the second flange 120 are both integrally formed with the main shaft body 100, the inner diameter of the first flange 110 is smaller than the inner diameter of the main shaft body 100, and the outer diameter of the second flange 120 is larger than the outer diameter of the main shaft body 100. One end of the mounting bracket is connected to a surface of the first flange 110 facing the second flange 120, the other end of the mounting bracket is connected to a surface of the second flange 120 facing away from the first flange 110, and a part of the mounting bracket close to the middle of the main shaft body 100 is magnetically connected to the inner wall of the main shaft body 100. The cables 900 extend into the main shaft body 100 from the first flange 110, are routed along the extension direction of the mounting bracket and fixed to the mounting bracket, and finally extend out of the main shaft body 100 from the second flange 120. Two ends of the cables 900 are butted to other external components respectively.

In the wiring arrangement process, the two ends of the mounting bracket are connected to the first flange 110 and the second flange 120 respectively, and the mounting bracket is fixedly connected to the inner wall of the main shaft body 100, so that the mounting bracket is fixed. During wiring, the cables 900 are arranged along the extension direction of the mounting bracket and fixed to the mounting bracket. Since the casting lug boss structure is eliminated on the inner wall of the main shaft and the mounting bracket is directly fixedly connected to the inner wall of the main shaft body 100, the structural form of the main shaft is optimized, machining efficiency is improved, and the production cycle is shortened.

In some optional embodiments, the mounting bracket is magnetically connected or bonded to the inner wall of the main shaft body 100, wherein bonding can be realized by high-viscosity adhesive; alternatively, an inner liner ring is arranged inside the main shaft body 100, the inner liner ring is coaxial with the main shaft body 100, the diameter of the inner liner ring is smaller than the inner diameter of the main shaft body 100, and the inner liner ring presses and fixes the mounting bracket to the inner wall of the main shaft body 100.

In the present embodiment, the mounting bracket includes a first mounting bracket 200 and a second mounting bracket 300, the first mounting bracket 200 and the second mounting bracket 300 are arranged along the axial direction of the main shaft body 100, one end of the first mounting bracket 200 away from the second mounting bracket 300 is connected to the first flange 110, one end of the second mounting bracket 300 away from the first mounting bracket 200 is connected to the second flange 120, and one end of the first mounting bracket 200 close to the second mounting bracket 300 and one end of the second mounting bracket 300 close to the first mounting bracket 200 are both fixedly connected to the inner wall of the main shaft body 100.

By providing the independent first mounting bracket 200 and second mounting bracket 300, when installing the first mounting bracket 200, one end of the first mounting bracket 200 away from the second mounting bracket 300 is connected to the first flange 110, and one end of the first mounting bracket 200 close to the second mounting bracket 300 is fixedly connected to the inner wall of the main shaft body 100; when installing the second mounting bracket 300, one end of the second mounting bracket 300 away from the first mounting bracket 200 is connected to the second flange 120, and one end of the second mounting bracket 300 close to the first mounting bracket 200 is fixedly connected to the inner wall of the main shaft body 100. The first mounting bracket 200 and the second mounting bracket 300 are installed separately, reducing the installation difficulty.

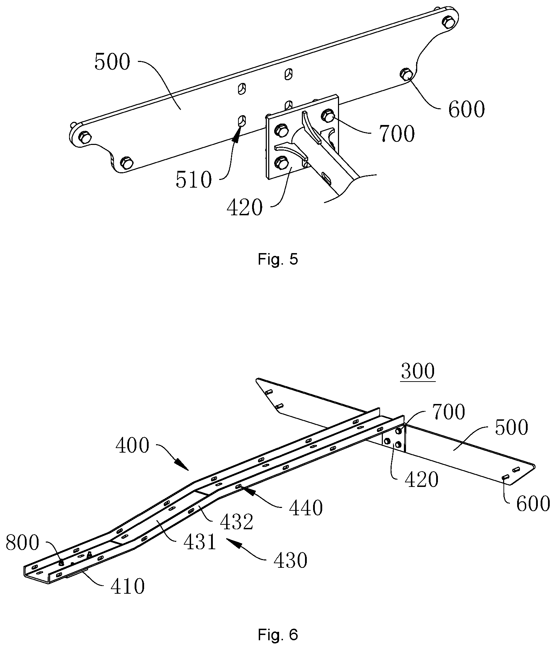

Referring to Fig. 4 to Fig. 6, in the present embodiment, taking the magnetic connection between the mounting bracket and the inner wall of the main shaft body 100 as an example, each of the first mounting bracket 200 and the second mounting bracket 300 includes a bent member 400 and a plate member 500 connected to each other, one end of the bent member 400 away from the plate member 500 is provided with a magnetic block 410, and the magnetic block 410 is magnetically connected to the inner wall of the main shaft body 100. Each of the first mounting bracket 200 and the second mounting bracket 300 includes a first fastener 600, and the plate member 500 in the first mounting bracket 200 is connected to the first flange 110 and the plate member 500 in the second mounting bracket 300 is connected to the second flange 120 via the first fastener 600.

The plate member 500 is connected to one end of the bent member 400, the magnetic block 410 has strong magnetic attraction force and a friction coefficient greater than 0.6, and the magnetic connection between the magnetic block 410 and the inner wall of the main shaft body 100 can prevent sliding displacement. The number of the magnetic blocks 410 can be one or more, which is not limited herein.

The first fastener 600 may optionally include a bolt and a self-locking washer. The plate member 500 in the first mounting bracket 200 is connected to the first flange 110 via the first fastener 600, and the plate member 500 in the second mounting bracket 300 is also connected to the second flange 120 via the first fastener 600, which can effectively prevent the plate member 500 from loosening and falling off.

It can be understood that in other embodiments, the first fastener 600 can also be a fastener such as a buckle, as long as the plate member 500 in the first mounting bracket 200 can be fixed to the first flange 110 and the plate member 500 in the second mounting bracket 300 can be fixed to the second flange 120, which is not limited herein.

The magnetic block 410 can be selected through finite element calculation and analysis according to the suction force and lateral sliding force required by the design, so as to meet the installation requirements of the wiring bracket inside the main shafts of different wind turbines and ensure the overall structural strength and fatigue life of the mounting bracket.

In the present embodiment, one end of the bent member 400 away from the magnetic block 410 is provided with a fixing plate 420, and the plate member 500 is provided with a waist-shaped hole 510 extending in the radial direction of the main shaft body 100. Each of the first mounting bracket 200 and the second mounting bracket 300 includes a second fastener 700, and the second fastener 700 penetrates the fixing plate 420 and the waist-shaped hole 510 at the same time to relatively fix the fixing plate 420 and the plate member 500.

The waist-shaped hole 510 is formed in a direction perpendicular to the plate member 500, the number of the waist-shaped holes 510 formed in the plate member 500 is more than two, the number of the second fasteners 700 included in each of the first mounting bracket 200 and the second mounting bracket 300 matches the number of the waist-shaped holes 510, and the second fastener 700 includes a bolt, a washer and a nut. Washers can be arranged on both sides of the plate member 500.

By forming the waist-shaped hole 510 in the plate member 500, the bent member 400 can adjust its position relative to the plate member 500 in the radial direction of the main shaft body 100, so as to offset the design error caused by the wall thickness tolerance of the main shaft body 100.

Exemplarily, four waist-shaped holes 510 are formed in the plate member 500, all the four waist-shaped holes 510 extend in the radial direction of the main shaft body 100, each of the first mounting bracket 200 and the second mounting bracket 300 includes four second fasteners 700, the bolt in each second fastener 700 penetrates the fixing plate 420 and the corresponding waist-shaped hole 510 at the same time, and the nut cooperates with the bolt to relatively fix the fixing plate 420 and the plate member 500.

It can be understood that the number of the waist-shaped holes 510 can be determined according to actual needs, for example, the number of the waist-shaped holes 510 can also be two, three or more than five, which is not limited herein.

In the present embodiment, the bent member 400 includes a plurality of consecutive bent portions 430, every two adjacent bent portions 430 are bent relative to each other, the plate member 500 is connected to the bent portion 430 at one end, and the magnetic block 410 is arranged on the bent portion 430 at the other end.

As the main load-bearing component, the bent member 400 needs to resist centrifugal force and deformation during the rotation of the main shaft. Therefore, the bent member 400 is designed to include a plurality of consecutive bent portions 430, which can reduce deformation to a certain extent during the rotation of the main shaft, ensure the rotational stiffness of the mounting bracket, and avoid breakage of the cables 900 caused by excessive deformation.

Exemplarily, the bent member 400 includes three consecutive bent portions 430, the middle bent portion 430 is arranged obliquely, the other two bent portions 430 extend in opposite directions, and every two adjacent bent portions 430 are in smooth transition.

It can be understood that the number of the bent portions 430 can be determined according to actual needs, for example, the number of the bent portions 430 can also be more than four, which is not limited herein.

In the present embodiment, an included angle between any two adjacent bent portions 430 in the first mounting bracket 200 is smaller than an included angle between any two adjacent bent portions 430 in the second mounting bracket 300. The bent portion 430 in the first mounting bracket 200 is tubular, and the bent portion 430 in the second mounting bracket 300 includes a sheet body 431 and folded edges 432 oppositely arranged on two sides of the sheet body 431.

It should be noted that the included angles between any two adjacent bent portions 430 in the first mounting bracket 200 are basically equal, and the included angles between any two adjacent bent portions 430 in the second mounting bracket 300 are basically equal. The plate member 500 in the first mounting bracket 200 is connected to the inner side of the first flange 110, so the bending degree between every two adjacent bent portions 430 is large and the included angle therebetween is small. The plate member 500 in the second mounting bracket 300 is connected to the inner side of the second flange 120, so the bending degree between every two adjacent bent portions 430 is small and the included angle therebetween is large, that is, the included angle between any two adjacent bent portions 430 in the first mounting bracket 200 is smaller than the included angle between any two adjacent bent portions 430 in the second mounting bracket 300.

Since the included angle between every two adjacent bent portions 430 in the second mounting bracket 300 is small, the bent portion 430 in the second mounting bracket 300 is designed to include the sheet body 431 and the folded edges 432 perpendicular to the sheet body 431, which can ensure the rigidity requirements in different directions during the rotation of the main shaft and reduce deformation to a certain extent. Since the bending degree between every two adjacent bent portions 430 in the first mounting bracket 200 is large, the bent portion 430 is designed to be tubular, for example, the bent member 400 is made of a steel pipe with good stiffness in all circumferential directions, so as to further enhance the resistance to possible deformation during the rotation of the main shaft.

In the first mounting bracket 200, an end of the bent portion 430 away from the plate member 500 is provided with a connecting plate 210, the magnetic block 410 is arranged on a surface of the connecting plate 210 facing the inner wall of the main shaft body 100, and an end of the bent portion 430 close to the plate member 500 is provided with a fixing plate 420. In the second mounting bracket 300, the magnetic block 410 is arranged on a surface of the sheet body 431 away from the plate member 500 facing the inner wall of the main shaft body 100, and a fixing plate 420 is arranged on the sheet body 431 close to the plate member 500. The fixing plate 420 can be integrally formed with the sheet body 431 and formed by bending relative to the sheet body 431.

One side of the connecting plate 210 facing the inner wall of the main shaft body 100 and one side of the sheet body 431 away from the plate member 500 facing the inner wall of the main shaft body 100 are adsorption sides. One side of the connecting plate 210 facing away from the inner wall of the main shaft body 100 and one side of the sheet body 431 away from the plate member 500 facing away from the inner wall of the main shaft body 100 are shielding sides. The connecting plate 210 and the sheet body 431 away from the plate member 500 are adsorbed and fixed to the inner wall of the main shaft body 100 through the magnetic blocks 410 on the adsorption sides respectively. The shielding sides of the connecting plate 210 and the sheet body 431 away from the plate member 500 have no suction force and do not interfere with signals of the cables 900.

In the present embodiment, each of the first mounting bracket 200 and the second mounting bracket 300 includes a third fastener 800, the third fastener 800 in the first mounting bracket 200 penetrates the magnetic block 410 and the connecting plate 210 at the same time to relatively fix the magnetic block 410 and the connecting plate 210; the third fastener 800 in the second mounting bracket 300 penetrates the magnetic block 410 and the sheet body 431 at the same time to relatively fix the magnetic block 410 and the sheet body 431.

The third fastener 800 may optionally include a stud, a nut and a washer. The stud in the first mounting bracket 200 penetrates the connecting plate 210 and then is connected to the magnetic block 410, and the nut cooperates with the stud to relatively fix the magnetic block 410 and the connecting plate 210. The stud in the second mounting bracket 300 penetrates the sheet body 431 and then is connected to the magnetic block 410, and the nut cooperates with the stud to relatively fix the magnetic block 410 and the sheet body 431.

In the present embodiment, through holes 440 configured for penetrating cable ties are formed in both the bent portion 430 in the first mounting bracket 200 and the folded edges 432 in the second mounting bracket 300.

In the first mounting bracket 200, a plurality of through holes 440 are formed at intervals along the side surfaces of the plurality of bent portions 430, each through hole 440 is configured for penetrating a cable tie, and the cable tie penetrates the through hole 440 and fixes the cable 900 to the bent portion 430. In the second mounting bracket 300, a plurality of through holes 440 are formed at intervals along the extension direction of the folded edges 432 on both sides of the sheet body 431, two through holes 440 at corresponding positions on the two folded edges 432 are configured for penetrating the same cable tie, and the cable tie penetrates the through hole 440 and fixes the cable 900 to the sheet body 431.

Technical effects of the main shaft for a wind turbine provided by the embodiment of the present application at least include: the main shaft requires less additional machining, has low manufacturing cost and is suitable for mass production; the main shaft is applicable to various types of wind turbines with different megawatt levels, such as doubly-fed turbines and semi-direct drive turbines; the main shaft eliminates the internal wiring bosses, has less machining workload, significantly improves production efficiency and can greatly shorten the production cycle of a single main shaft; the main body of the mounting bracket adopts the form of a bent member 400, which can effectively resist sliding and deformation of the mounting bracket during the rotation of the main shaft and ensure the stability and safety of the mounting bracket and the cables 900; the waist-shaped hole 510 formed in the plate member 500 can effectively adjust the relative height of the bent member 400, so as to offset the design error caused by the wall thickness tolerance of the main shaft.

The embodiment of the present application further provides a wind turbine, including the main shaft for a wind turbine as described above. The technical effects of the wind turbine are basically the same as those of the main shaft for a wind turbine, and will not be repeated herein.

In summary, the embodiment of the present application provides a main shaft for a wind turbine and a wind turbine. In the wiring arrangement process, one end of the first mounting bracket 200 away from the second mounting bracket 300 is connected to the first flange 110, and one end of the first mounting bracket 200 close to the second mounting bracket 300 is directly fixedly connected to the inner wall of the main shaft body 100; one end of the second mounting bracket 300 away from the first mounting bracket 200 is connected to the second flange 120, and one end of the second mounting bracket 300 close to the first mounting bracket 200 is directly fixedly connected to the inner wall of the main shaft body 100. The cables 900 are arranged along the arrangement direction of the first mounting bracket 200 and the second mounting bracket 300 and fixed to the first mounting bracket 200 and the second mounting bracket 300. Since the casting lug boss structure is eliminated, the structural form of the main shaft is optimized, machining efficiency is improved, and the production cycle is shortened.

The above are only specific implementations of the present application, but the protection scope of the present application is not limited thereto. Changes or replacements that can be easily conceived by those skilled in the art within the technical scope disclosed by the present application shall fall within the protection scope of the present application. Therefore, the protection scope of the present application shall be subject to the protection scope of the claims.

## Claims

1. A main shaft for a wind turbine, **characterized by** comprising a main shaft body (100) and a mounting bracket configured to fix cables (900), wherein the main shaft body (100) is oppositely provided with a first flange (110) and a second flange (120) along its own axial direction, the first flange (110) is located on the inner side of the main shaft body (100), and the second flange (120) is located on the outer side of the main shaft body (100); the mounting bracket is arranged inside the main shaft body (100), two ends of the mounting bracket are connected to the first flange (110) and the second flange (120) respectively, and the mounting bracket is fixedly connected to the inner wall of the main shaft body (100).

2. The main shaft for a wind turbine according to claim 1, wherein the mounting bracket is magnetically connected or bonded to the inner wall of the main shaft body (100).

3. The main shaft for a wind turbine according to claim 1, wherein the mounting bracket comprises a first mounting bracket (200) and a second mounting bracket (300), the first mounting bracket (200) and the second mounting bracket (300) are arranged along the axial direction of the main shaft body (100), one end of the first mounting bracket (200) away from the second mounting bracket (300) is connected to the first flange (110), one end of the second mounting bracket (300) away from the first mounting bracket (200) is connected to the second flange (120), and one end of the first mounting bracket (200) close to the second mounting bracket (300) and one end of the second mounting bracket (300) close to the first mounting bracket (200) are both fixedly connected to the inner wall of the main shaft body (100).

4. The main shaft for a wind turbine according to claim 3, wherein each of the first mounting bracket (200) and the second mounting bracket (300) comprises a bent member (400) and a plate member (500) connected to each other, one end of the bent member (400) away from the plate member (500) is provided with a magnetic block (410), and the magnetic block (410) is magnetically connected to the inner wall of the main shaft body (100);
each of the first mounting bracket (200) and the second mounting bracket (300) comprises a first fastener (600), and the plate member (500) in the first mounting bracket (200) is connected to the first flange (110) and the plate member (500) in the second mounting bracket (300) is connected to the second flange (120) via the first fastener (600).

5. The main shaft for a wind turbine according to claim 4, wherein one end of the bent member (400) away from the magnetic block (410) is provided with a fixing plate (420), and the plate member (500) is provided with a waist-shaped hole (510) extending in the radial direction of the main shaft body (100);
each of the first mounting bracket (200) and the second mounting bracket (300) comprises a second fastener (700), and the second fastener (700) penetrates the fixing plate (420) and the waist-shaped hole (510) at the same time to relatively fix the fixing plate (420) and the plate member (500).

6. The main shaft for a wind turbine according to claim 4, wherein the bent member (400) comprises a plurality of consecutive bent portions (430), every two adjacent bent portions (430) are bent relative to each other, the plate member (500) is connected to the bent portion (430) at one end, and the magnetic block (410) is arranged on the bent portion (430) at the other end.

7. The main shaft for a wind turbine according to claim 6, wherein an included angle between any two adjacent bent portions (430) in the first mounting bracket (200) is smaller than an included angle between any two adjacent bent portions (430) in the second mounting bracket (300);
the bent portion (430) in the first mounting bracket (200) is tubular, and the bent portion (430) in the second mounting bracket (300) comprises a sheet body (431) and folded edges (432) oppositely arranged on two sides of the sheet body (431).

8. The main shaft for a wind turbine according to claim 7, wherein in the first mounting bracket (200), an end of the bent portion (430) away from the plate member (500) is provided with a connecting plate (210), and the magnetic block (410) is arranged on a surface of the connecting plate (210) facing the inner wall of the main shaft body (100);
in the second mounting bracket (300), the magnetic block (410) is arranged on a surface of the sheet body (431) away from the plate member (500) facing the inner wall of the main shaft body (100).

9. The main shaft for a wind turbine according to claim 8, wherein each of the first mounting bracket (200) and the second mounting bracket (300) comprises a third fastener (800), the third fastener (800) in the first mounting bracket (200) penetrates the magnetic block (410) and the connecting plate (210) at the same time to relatively fix the magnetic block (410) and the connecting plate (210); the third fastener (800) in the second mounting bracket (300) penetrates the magnetic block (410) and the sheet body (431) at the same time to relatively fix the magnetic block (410) and the sheet body (431).

10. The main shaft for a wind turbine according to claim 7, wherein through holes (440) configured for penetrating cable ties are formed in both the bent portion (430) in the first mounting bracket (200) and the folded edges (432) in the second mounting bracket (300).

11. A wind turbine, **characterized by** comprising the main shaft for a wind turbine according to any one of claims 1 to 10.
